# FASCICULE DE BREVET EUROPEEN

(11) **EP 1 510 443 B1**
(45) Date de publication et mention de la délivrance du brevet: **13.09.2006**
(21) Numéro de dépôt: 04291670.0
(22) Date de dépôt: 01.07.2004
(51) Int. Cl.: B62D 21/11, B62D 5/04, B62D 35/02

(54) **Vèhicule automobile à crèmaillère de direction intègrèe dans la traverse avant**
Kraftfahrzeug mit im vorderen Querträger integrierter Zahnstangenlenkung
Motor vehicle with steering rack integrated in the front transversal beam

(30) Priorité: 25.08.2003 FR 0310134
(43) Date de publication de la demande: 02.03.2005
(73) Titulaire: Peugeot Citroën Automobiles S.A., 78140 Vélizy Villacoublay (FR)
(72) Inventeur: Mallet, Cèdric, 92330 Sceaux (FR); Coppin, Olivier, 77700 Chessy (FR); Janssens, Jean-Baptiste, 92400 Courbevoie (FR)
(74) Mandataire: Thinat, Michel

(56) Documents cités:
- EP-B- 0 441 818
- DE-A- 3 110 991
- DE-A- 10 142 388
- FR-A- 2 615 458
- FR-A- 2 725 393
- US-A1- 2003 107 200

## Description

L'invention concerne en général les véhicules automobiles.

Plus précisément, l'invention concerne un véhicule automobile comprenant un berceau muni de deux bras de support de roues latéraux opposés et d'une traverse transversale solidaire des deux bras, et un dispositif de commande de direction permettant d'orienter les roues comprenant une crémaillère transversale.

Des véhicules de ce type sont connus de l'art antérieur. En particulier, le document de brevet FR 2 615 458 révèle un berceau monobloc comprenant un carter de crémaillère venu de moulage.

De tels berceaux sont lourds et les interventions sur la crémaillère de direction sont rendues difficiles par le fait que le carter ne peut pas être démonté. Le document US 2003/10722 A décrit un véhicule selon le préambule de la revendication 1.

Dans ce contexte, la présente invention a pour but de pallier les défauts mentionnés ci-dessus.

A cette fin, le véhicule de l'invention, comprend les caractéristques de la revendication 1.

Dans un mode de réalisation possible de l'invention, la traverse est formée de deux demi-coquilles mutuellement assemblées.

De préférence, la crémaillère comprend un carter transversal rigidement fixé à l'intérieur de la traverse et un mécanisme de commande mobile à l'intérieur du carter.

Avantageusement, le carter est rigidement fixé par des tiges boulonnées aux deux demi-coquilles.

Par exemple, le dispositif de commande de direction est électrique et comprend un moteur disposé à l'intérieur de la traverse.

De préférence, le dispositif de commande de direction comprend un calculateur embarqué disposé à l'intérieur de la traverse.

Avantageusement, le calculateur est fixé au contact de la traverse, de telle sorte que l'énergie thermique dégagée par ce calculateur est dissipée partiellement par conduction dans la traverse.

Par exemple, la traverse comprend des orifices de ventilation de l'intérieur de la traverse.

De préférence, la traverse présente un profil adapté pour créer un appui aérodynamique sur les roues.

D'autres caractéristiques et avantages de l'invention ressortiront clairement de la description qui en est faite ci-dessous, à titre indicatif et nullement limitatif, en référence aux figures annexées, parmi lesquelles :
- les figures 1A et 1B sont des vues en perspective de berceaux de l'art antérieur avec le dispositif de commande de direction associé, le pot d'échappement du véhicule passant respectivement au-dessus et en dessous de la traverse,
- la figure 2 est une vue en coupe transversale du berceau et de la crémaillère de direction des figures 1A et 1B,
- la figure 3 est une vue en coupe transversale de la traverse et de la crémaillère d'un autre véhicule ,
- la figure 4 est une vue en coupe longitudinale selon les flèches IV de la figure 3,
- la figure 5 est une vue similaire à la figure 4, d'un mode de réalisation de l'invention, et
- la figure 6 est un schéma de principe, montrant, sur une vue similaire à la figure 4, l'effet aérodynamique d'appui obtenu en profilant la traverse.

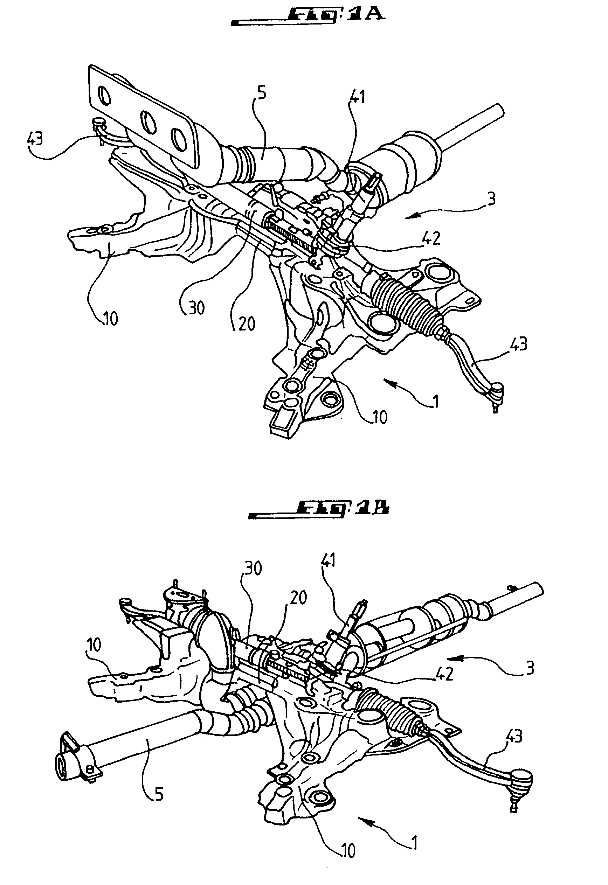

L'invention concerne un véhicule automobile du type comprenant, comme le montrent les figures 1A et 1B, un berceau 1 muni de deux bras 10 de support de roues et d'une traverse 20 transversale solidaire des deux bras 10, et un dispositif 3 de commande de direction permettant d'orienter les roues, ce dispositif comprenant une crémaillère transversale 30.

Les bras 10 sont sensiblement longitudinaux et sont disposés des deux côtés latéraux opposés du véhicule. Ils supportent les triangles de roue (non représentés), sur lesquels sont montées les fusées de roues avant.

Le châssis du véhicule est suspendu aux bras par l'intermédiaire d'amortisseurs non représentés.

Le dispositif de commande de direction 3 comprend, de façon connue, un volant (non représenté), une colonne de direction 41 solidaire en rotation du volant, un dispositif à engrenage 42 transformant le mouvement de rotation de la colonne de direction 41 en un mouvement de translation transversal de la crémaillère 30, des barres de commandes 43 disposées des deux côtés latéraux opposés de la crémaillère 30 et entraînées en translation par la crémaillère 30, et des dispositifs de commande à pivot (non représentés) transformant le mouvement de translation des barres de commande 43 en mouvement de pivotement des roues.

La traverse 20 est disposée au-dessus des bras 10, de telle sorte que le berceau, vu de face c'est-à-dire de l'avant du véhicule, présente une forme dite en chapeau de gendarme. Elle est rigidement fixée sur les bras 10 par deux extrémités opposées.

Selon l'invention, la traverse 20 présente la forme d'une coquille creuse, la crémaillère 30 étant disposée à l'intérieur de la traverse 20.

Plus précisément, la traverse 20 est formée de deux demi-coquilles 21 mutuellement assemblées.

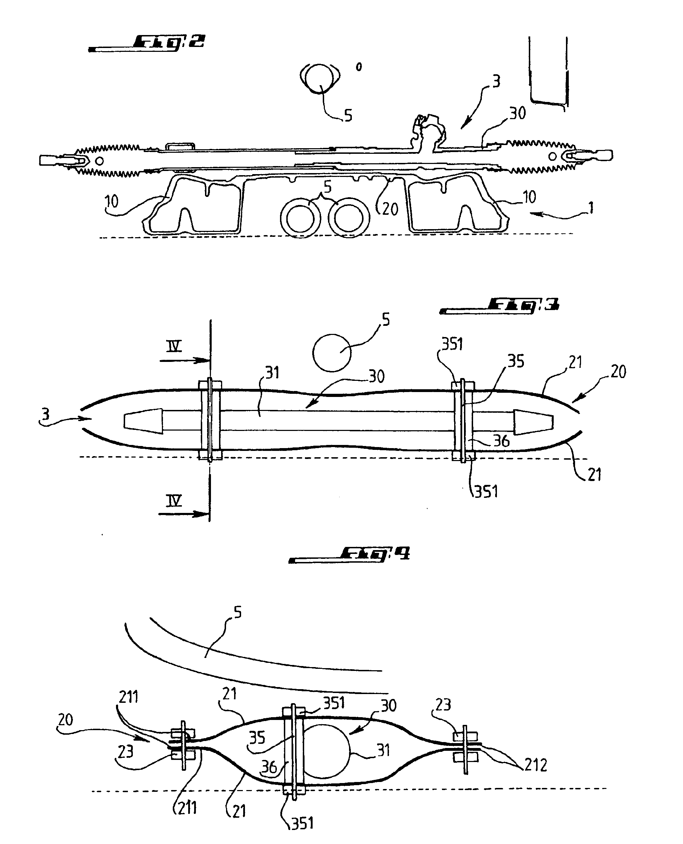

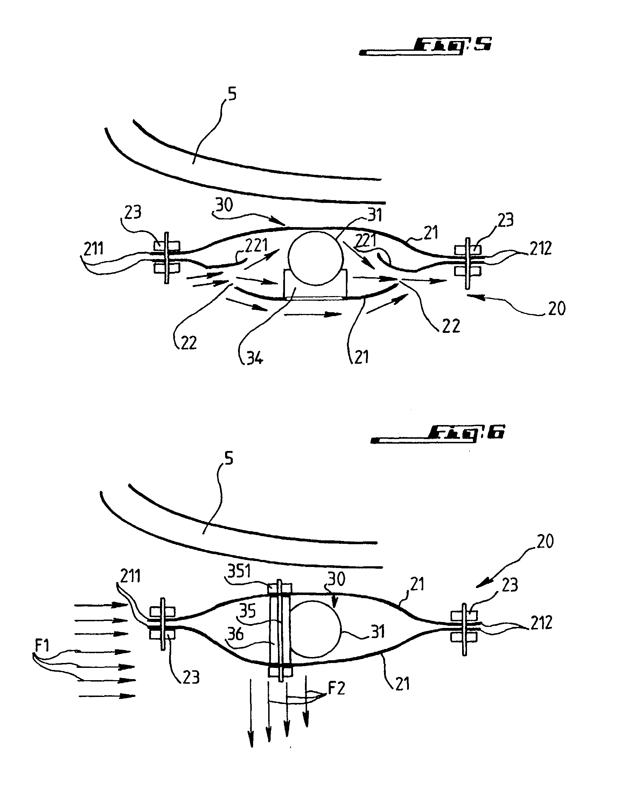

Ces demi-coquilles 21 constituent des parties supérieure et inférieure de la traverse 20, comme le montrent les figures 3 et 4. Elles présentent chacune une forme concave, et sont assemblées de telle sorte que ces concavités soient tournées l'une vers l'autre.

Chaque demi-coquille 21 présente des bords transversaux avant et arrière 211 et 212 et sont assemblées l'une à l'autre de telle sorte que leurs bords avant 211 respectifs soient plaqués l'un contre l'autre et que leurs bords arrière 212 respectifs soient également plaqués l'un contre l'autre.

Le plan de contact entre les deux demi-coquilles 21, qui passe par les bords avant et arrière 211 et 212, est pratiquement horizontal.

Comme le montre la figure 4, les bords avant 211 sont mutuellement fixés par des ensembles vis/écrous 23, de même que les bords arrière 212.

La crémaillère 30 comprend un carter transversal 31 rigidement fixé à l'intérieur de la traverse 20 et un mécanisme de commande mobile par translation à l'intérieur du carter 31. Ce mécanisme de commande est par exemple constitué d'un prolongement d'une des barres de commande 43. Le dispositif à engrenage 42 comprend typiquement un pignon entraîné en rotation par la colonne de direction 41, et une partie crantée de la barre de commande 43 engrenant le pignon.

Plus précisément, le carter 31 est rigidement fixé aux deux demi-coquilles 21 par des tiges boulonnées 35. Comme le montrent les figures 3 et 4, la crémaillère comprend des pièces de fixations 36 cylindriques rigidement fixées sur le carter 31, percées chacune d'un alésage central.

Ces pièces de fixation 36 s'étendent perpendiculairement au carter 31, entre les deux demi-coquilles 21, sur lesquels elles prennent appui. Elles sont sensiblement normales aux demi-coquilles 21.

Les tiges boulonnées 35 traversent les alésages des pièces de fixation 36 et les deux demi-coquilles 21. Des écrous 351 sont vissés aux deux extrémités opposées de chaque tige 35, de telle sorte que les demi-coquilles 21 sont prises entre les écrous 351 et les extrémités de la pièce de fixation 36.

La crémaillère comprend typiquement deux pièces de fixation 36.

Dans le mode de réalisation de l'invention représenté sur les figures 5 et 6, le dispositif de commande de direction 3 est électrique et comprend un moteur disposé à l'intérieur de la traverse 20.

Le dispositif de commande de direction 3 peut également comprendre un calculateur embarqué 34 disposé lui aussi à l'intérieur de la traverse 20.

Il est alors particulièrement avantageux de fixer le calculateur 34 au contact d'une des demi-coquilles 21 de la traverse 20, de telle sorte que l'énergie thermique dégagée par ce calculateur est dissipée partiellement par conduction dans ladite demi-coquille.

Ces demi-coquilles sont alors de préférence réalisées dans un matériau bon conducteur de chaleur, comme l'acier.

On notera que, comme représenté sur la figure 5, un flux d'air continu balaye l'extérieur de la traverse 20 quand le véhicule se déplace. Ce flux crée une convection forcée qui favorise l'évacuation de la chaleur dégagée par le calculateur et transmise par conduction dans la demi-coquille 21.

Comme le montre encore la figure 5, la traverse 20 comprend des orifices 22 de ventilation de l'intérieur de la traverse 20.

Des orifices 22 d'entrée d'air sont ménagés d'un côté avant de la demi-coquille 21 qui forme la partie inférieure de la traverse, et des orifices 22 d'évacuation d'air sont ménagés d'un côté arrière de cette même demi-coquille 21.

Des volets 221 permettent de canaliser l'air entrant vers le calculateur, et de canaliser l'air sortant vers les orifices de sortie 22.

On crée ainsi une convection forcée autour du calculateur 34, favorisant l'évacuation de la chaleur dégagée.

Enfin, la traverse 20 présente un profil adapté pour créer un appui aérodynamique sur les roues, comme le montre la figure 6. La section de la traverse 20 dans un plan perpendiculaire à la direction transversale est aplatie et présente une forme de bouche, plus longue suivant une direction longitudinale que haute. Elle présente des bords avant et arrière effilés.

Le bord d'attaque, c'est-à-dire le bord avant, peut être doté d'un profil tel que l'air incident, quand le véhicule se déplace, tend à plaquer la traverse 20 vers le sol et à maintenir les roues en appui. L'air incident est représenté par les flèches F1 sur la figure 6, les flèches F2 représentant l'effort vertical résultant de la pression de l'air sur la traverse.

On comprend donc bien que le véhicule de l'invention présente de nombreux avantages.

Disposer la crémaillère à l'intérieur de la traverse permet de diminuer l'encombrement de l'ensemble berceau-crémaillère, et donne une plus grande liberté pour ménager le passage du tuyau d'échappement 5. Celui-ci peut passer au-dessus de la traverse, ou en dessous de celle-ci entre les deux bras 10.

Par ailleurs, cette disposition permet si nécessaire d'augmenter la section de la crémaillère et de passer des efforts plus importants, ce qui n'était pas possible dans l'art antérieur à cause des interférences géométriques avec le tuyau d'échappement 5.

De plus, un berceau en chapeau de gendarme n'offre généralement pas une bonne rigidité, et il est souvent nécessaire de rajouter des barres de renforcement permettant de maintenir constant l'écartement des bras 10.

Le mode de fixation du carter de la crémaillère décrit ci-dessus permet de renforcer cette rigidité en créant des points de fixation supplémentaires entre les deux demi-coquilles, au centre de la traverse.

On notera également que les différents éléments de la crémaillère et le calculateur sont protégés de la chaleur dégagée par le tuyau d'échappement par les demi-coquilles 21.

On peut encore souligner que la crémaillère disposée conformément à l'invention est plus basse et plus en avant que dans les véhicules de l'art antérieur pour lesquels la crémaillère est disposée au dessus de la traverse, ce qui est favorable du point de vue cinématique.

Enfin, l'accès à la crémaillère est facile du fait de la structure de la traverse en deux demi-coquilles assemblées l'une à l'autre par des ensembles vis/écrous. Il est très simple et rapide de retirer la demi-coquille inférieure.

## Revendications

1. Véhicule automobile comprenant un berceau (1) muni de deux bras (10) de support de roues latéraux opposés et d'une traverse (20) transversale solidaire des deux bras (10), et un dispositif de commande de direction électrique permettant d'orienter les roues comprenant une crémaillère transversale (30), la traverse (20) présentant la forme d'une coquille creuse, la crémaillère (30) étant disposée à l'intérieur de la traverse (20), **caractérisé en ce que** le dispositif de commande de direction (3) comprend un moteur disposé à l'intérieur de la traverse (20).

2. Véhicule selon la revendication 1, **caractérisé en ce que** la traverse (20) est formée de deux demi-coquilles (21) mutuellement assemblées.

3. Véhicule selon la revendication 1 ou 2, **caractérisé en ce que** la crémaillère (30) comprend un carter transversal (31) rigidement fixé à l'intérieur de la traverse (20) et un mécanisme de commande mobile à l'intérieur du carter (31).

4. Véhicule selon les revendications 2 et 3 combinées, **caractérisé en ce que** le carter (31) est rigidement fixé par des tiges boulonnées aux deux demi-coquilles (21).

5. Véhicule selon l'une des revendications 1 à 4, **caractérisé en ce que** le dispositif de commande de direction (3) comprend un calculateur embarqué (34) disposé à l'intérieur de la traverse (20).

6. Véhicule selon la revendication 5, **caractérisé en ce que** le calculateur (34) est fixé au contact de la traverse (20), de telle sorte que l'énergie thermique dégagée par ce calculateur (34) est dissipée partiellement par conduction dans la traverse.

7. Véhicule selon l'une quelconque des revendications précédentes, **caractérisé en ce que** la traverse (20) comprend des orifices (22) de ventilation de l'intérieur de la traverse.

8. Véhicule selon l'une quelconque des revendications précédentes, **caractérisé en ce que** la traverse (20) présente un profil adapté pour créer un appui aérodynamique sur les roues.

## Claims

1. Motor vehicle comprising a cradle (1) provided with two arms (10) for supporting opposite side wheels and a transverse crossmember (20) firmly attached to both arms (10), and an electrical steering control device with which the wheels may be directed, comprising a transverse rack (30), the crossmember (20) having the shape of a hollow shell, the rack (30) being positioned inside the crossmember (20), **characterized in that** the steering control device (3) comprises a motor positioned inside the crossmember (20).

2. The vehicle according to claim 1, **characterized in that** the crossmember (20) is formed with two mutually assembled half-shells (21).

3. The vehicle according to claim 1 or 2, **characterized in that** the rack (30) comprises a transverse casing (31) rigidly attached to the inside of the crossmember (20) and a mobile control mechanism inside the casing (31).

4. The vehicle according to the combined claims 2 and 3, **characterized in that** the casing (31) is rigidly attached by shanks bolted to both half-shells (21).

5. The vehicle according to any of claims 1 to 4, **characterized in that** the steering control device (3) comprises an on-board computer (34) positioned inside the crossmember (20).

6. The vehicle according to claim 5, **characterized in that** the computer (34) is attached and in contact with the crossmember (20) so that the heat energy given off by this computer (34) is partially dissipated by conduction in the crossmember.

7. The vehicle according to any of the preceding claims, **characterized in that** the crossmember (20) comprises ventilation ports (22) inside the crossmember.

8. The vehicle according to any of the preceding claims, **characterized in that** the crossmember (20) has a profile suitable for creating aerodynamic support on the wheels.

## Patentansprüche

1. Kraftfahrzeug, ein Gestell (1) mit zwei Armen (10) zur Abstützung gegenüberliegender seitlicher Räder und einen mit den zwei Armen (10) verbundenen Querträger (20) umfassend, und eine elektrische Lenkvorrichtung, mit der die Räder, die eine querliegende Zahnstange (30) umfassen, gesteuert werden können, wobei der Querträger (20) die Form einer Hohlschale aufweist und die Zahnstange (30) im Querträger (20) angeordnet ist, **dadurch gekennzeichnet, dass** die Lenkvorrichtung (3) einen im Querträger (20) angeordneten Motor umfasst.

2. Fahrzeug nach Anspruch 1, **dadurch gekennzeichnet, dass** der Querträger (20) von zwei aneinander montierten Halbschalen (21) gebildet wird.

3. Fahrzeug nach Anspruch 1 oder 2, **dadurch gekennzeichnet, dass** die Zahnstange (30) ein querliegendes, im Querträger (20) starr verbundenes Gehäuse (31) und einen beweglichen Steuermechanismus im Gehäuse (31) umfasst.

4. Fahrzeug nach den kombinierten Ansprüchen 2 und 3, **dadurch gekennzeichnet, dass** das Gehäuse (31) durch verbolzte Stangen mit den zwei Halbschalen (21) starr verbunden ist.

5. Fahrzeug nach einem der Ansprüche 1 bis 4, **dadurch gekennzeichnet, dass** die Lenkvorrichtung (3) einen bordinternen Rechner (34) umfasst, der im Querträger (20) angeordnet ist.

6. Fahrzeug nach Anspruch 5, **dadurch gekennzeichnet, dass** der Rechner (34) derart am Querträger (20) kontaktbildend befestigt ist, dass die von diesem Rechner (34) abgegebene thermische Energie teilweise durch Ableitung in den Querträger abgeführt wird.

7. Fahrzeug nach einem der vorhergehenden Ansprüche, **dadurch gekennzeichnet, dass** der Querträger (20) Öffnungen (22) zur Belüftung des Innenraums des Querträgers umfasst.

8. Fahrzeug nach einem der vorhergehenden Ansprüche, **dadurch gekennzeichnet, dass** der Querträger (20) ein Profil aufweist, das geeignet ist, um auf den Rädern eine dynamische Abstützung zu schaffen.
